# FASCICULE DE BREVET EUROPEEN

(11) **EP 3 835 508 B1**
(45) Date de publication et mention de la délivrance du brevet: **21.10.2026**
(21) Numéro de dépôt: 20210601.9
(22) Date de dépôt: 30.11.2020
(51) Int. Cl.: E04D 13/16, E04B 9/00, E04B 9/18, E04B 1/76, E04F 13/08, F16B 5/06, F16B 21/04

(54) **SYSTÈME DE FIXATION POUR UNE ISOLATION SOUS TOITURE**
SYSTEM ZUR BEFESTIGUNG FÜR EINE UNTERDACHISOLATION
SYSTEM FOR ATTACHING AN UNDERROOF INSULATION

(30) Priorité: 09.12.2019 FR 1913950
(43) Date de publication de la demande: 16.06.2021
(73) Titulaire: Knauf Insulation, 92300 Levallois-Perret (FR)
(72) Inventeur: EMON, Thierry, 25130 Villers le Lac (FR); CAMILLATO, Giuliano, 91250 Saint Germain lès Corbeil (FR)
(74) Mandataire: LLR

(56) Documents cités:
- EP-A1- 3 009 582
- EP-A1- 3 156 555
- EP-A1- 3 156 556
- EP-A1- 3 190 242
- EP-A2- 2 781 668
- FR-A1- 3 068 998

## Description

La présente invention se rapporte au domaine de l'isolation thermique ou phonique et, plus particulièrement, de la rénovation thermique de l'habitat.

Afin d'isoler thermiquement un bâtiment, il est nécessaire de réaliser une isolation de la toiture, ce qui se fait généralement par l'intérieur et permet de ne pas dénaturer l'aspect extérieur du bâtiment. L'isolation inclut une membrane pare-vapeur et/ou d'étanchéité à l'air, généralement disposée sous une couche de matériau isolant, entre cette couche et le parement. La toiture peut être horizontale ou en pente ; le plafond est généralement horizontal. Une telle isolation peut aussi être utilisée sur une paroi verticale.

Il existe des suspentes qui permettent de suspendre un système d'isolation à une charpente existante du bâtiment. Ces suspentes comprennent généralement des moyens de fixation à la charpente, des moyens de support pour un isolant et des moyens de fixation pour un habillage intérieur qui permet de masquer l'isolant et la fixation. De telles suspentes sont notamment connues du document EP 3 156 555 et du document EP 3 190 242.

Cependant, lorsqu'elle est mise en œuvre, une telle suspente vient percer la membrane pare-vapeur, ce qui nécessite des moyens pour en rétablir l'étanchéité, autour de la suspente. La mise en œuvre de tels moyens, nécessite de l'opérateur qui en est chargé de grandes précautions et du temps ; dans les conditions d'un chantier, cette opération n'est pas toujours bien réalisée. La membrane peut notamment être fragilisée ou blessée et l'étanchéité peut se détériorer au cours du temps.

Selon la norme Européenne EN 1931 et le Document Technique Unifié DTU 31.2, une membrane par vapeur doit avoir une résistance au passage de la vapeur (Sd) supérieure à 18m ou à 90m, selon le cas. Typiquement, une membrane pare-vapeur a une épaisseur d'un à deux millimètres.

Dans les bâtiments comprenant une isolation avec pare-vapeur, il y a toujours des fuites. L'un des buts de la présente invention est de s'assurer que le système de suspension n'est pas un maillon faible dans l'étanchéité.

Un but de l'invention, est de proposer un système pour isoler un bâtiment, comprenant une pièce permettant de fixer facilement une isolation et un parement à une structure d'un bâtiment et assurer un niveau d'étanchéité satisfaisant de la membrane pare-vapeur.

Un autre but de l'invention est de proposer un système où une telle pièce évite un pincement radial et/ou axial de la membrane dans une position d'usage, un tel pincement risquant de fragiliser ou blesser la membrane.

Pour résoudre ce problème l'invention propose un système pour isoler un bâtiment, qui comprend les caractéristiques de la revendication 1 ou de la revendication 2.

Dans une position d'usage, la chicane forme avantageusement un jeu longitudinal et un jeu radial supérieurs à l'épaisseur de la feuille. Ces jeux sont de préférence compris entre deux et trois fois l'épaisseur de la feuille.

La pièce comprend une rondelle et un embout, la tige comprenant successivement, selon un axe longitudinal :
- des moyens pour fixer la pièce, au moins indirectement, à la structure ;
- des moyens pour accrocher la rondelle sur la tige dans une position d'usage ; et,
- des moyens, pour solidariser l'embout avec la tige, dans la position d'usage ; la rondelle comprenant selon la revendication 1 une collerette qui s'étend radialement et l'embout comprenant une coupelle, la collerette et la coupelle étant disposées de sorte que, dans la position d'usage, elles forment ensemble la chicane.

De préférence, dans la position d'usage, la collerette est, au moins partiellement, longitudinalement logée dans la coupelle.

Selon la revendication 1, la collerette comprend un bord périphérique et la coupelle comprend une paroi périphérique ayant un bord supérieur, disposés de sorte que, dans la position d'usage de la chicane ainsi réalisée, la feuille forme une zone en contact avec une face de la collerette et une zone en contact avec la garniture, ces deux zones étant sensiblement parallèles entre elles et raccordées par deux plis de courbures opposées encadrant une zone tronconique. Avantageusement, la zone tronconique forme avec l'axe de la pièce un angle compris entre dix et quatre-vingts degrés. De préférence, l'angle est compris entre trente de quarante-cinq degrés.

La rondelle et/ou l'embout peuvent former le support pour la garniture.

Avantageusement, la chicane forme un maintien libre de la feuille par la pièce. La feuille est de préférence en prise glissante contre la face de la collerette. La feuille peut être une membrane, par exemple une membrane pare-vapeur, indépendante de la garniture, ou, être une rustine coopérant avec un revêtement de surface de la garniture.

L'invention porte aussi sur un procédé d'isolation utilisant un système selon l'invention dans lequel la feuille est une membrane ou une rustine coopérant avec un revêtement de surface de la garniture, et qui comprend les étapes suivantes :
- fourniture d'au moins une pièce ;
- fixation de la tige de chaque pièce à la structure ;
- embrochage de l'isolant sur les tiges ;
- fixation d'une rondelle sur au moins une des tiges ;
- embrochage de la feuille sur au moins une des tiges sous la rondelle ; et,
- fixation d'un embout sur au moins une des tiges,
de préférence, de sorte que la feuille est maintenue de façon mobile entre l'au moins une rondelle et l'au moins un embout.

Un système ou un procédé selon l'invention peut être utilisé pour une isolation thermique et/ou pour une isolation phonique, notamment.

Plusieurs modes d'exécution de l'invention seront décrits ci-après, à titre d'exemples non limitatifs, en référence aux dessins annexés dans lesquels :
[Fig. 1] est une vue illustrant un système selon l'invention pour isoler un bâtiment, à laquelle une pièce est représentée verticalement selon son extension longitudinale ;
[Fig. 2] est une vue éclatée de la pièce de la figure 1, représentée isolément ;
[Fig. 3] est une vue en coupe partielle d'une extrémité distale de la pièce, à l'endroit où elle est en prise avec une membrane d'étanchéité du système de la figure 1 ;
[Fig. 4] est une demi-coupe partielle similaire à la coupe de la figure 3, représentant une position de la membrane lorsque la pression à l'intérieur est supérieure à la pression à l'extérieur du bâtiment ;
[Fig. 5] est une demi-coupe partielle similaire à la coupe de la figure 4, représentant une position de la membrane lorsque la pression à l'extérieur est supérieure à la pression à l'intérieur du bâtiment ;
[Fig. 6] est une demi-coupe partielle similaire à celle des figures 3 et 4, illustrant un deuxième mode de réalisation pour une pièce d'un système alternatif selon l'invention ; et,
[Fig. 7] est une demi-coupe partielle, illustrant schématiquement la chicane pour une pièce selon le mode de réalisation des figures 1 à 5 et correspond à un agrandissement de la zone repérée VII à la figure 3.

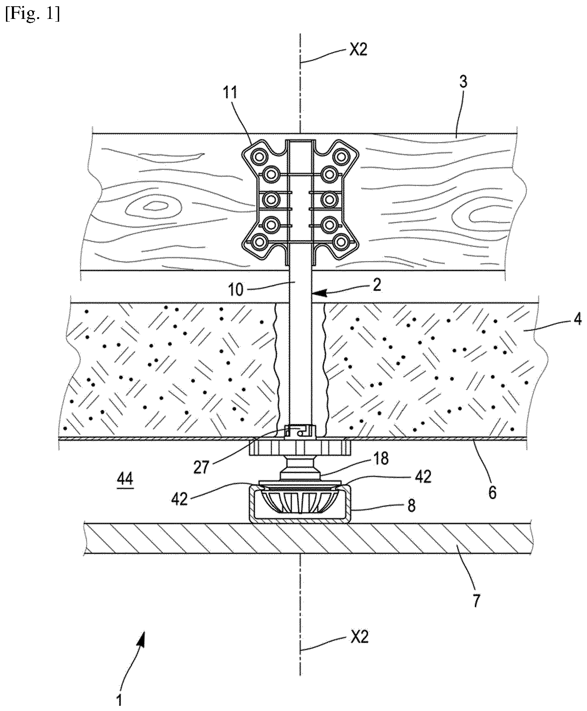

Les termes haut et bas, notamment, font référence à la disposition de la figure 1, sans que cela soit limitatif.

La figure 1 illustre un système 1 selon l'invention pour une isolation thermique sous toiture d'un bâtiment. Le système comprend des pièces ci-après dénommées suspentes 2, qui permettent de fixer le système à une charpente 3.

Dans l'exemple illustré, outre la suspente 2, le système d'isolation thermique 1 comprend une garniture de matériau isolant 4, ici thermiquement isolant, une membrane 6 et un parement 7.

Dans l'exemple illustré, la garniture 4 comprend une seule couche de matériau isolant fibreux tel que de la laine minérale. La membrane 6 est une membrane pare-vapeur indépendante du matériau isolant, d'épaisseur sensiblement constante E6. Le parement est une plaque de plâtre.

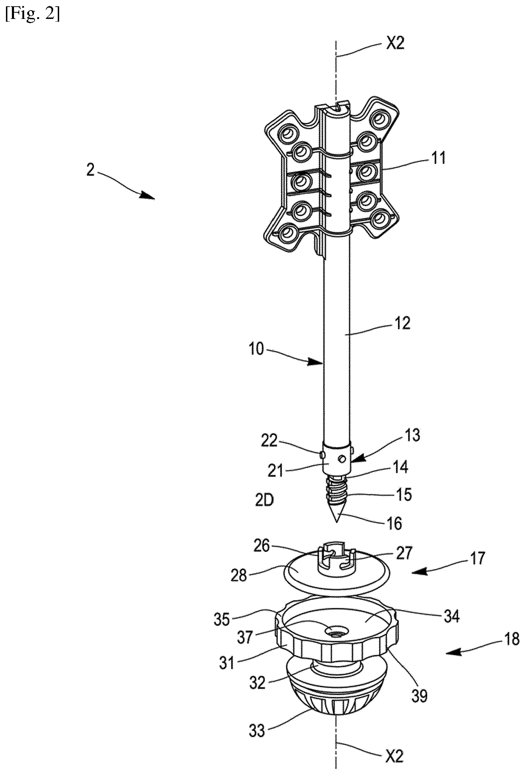

A la figure 1, une seule suspente 2 est représentée, en position d'usage. Elle a un axe longitudinal X2, disposé verticalement. A la figure 2, elle est représentée de façon plus détaillée et isolément, ses composants étant séparés les uns des autres. La suspente illustrée comprend une tige 10, cette tige comprenant, de haut en bas :
- des moyens 11 pour fixer la suspente à la charpente ;
- une allonge 12, solidaire des moyens de fixation 11, sensiblement cylindrique et lisse, s'étendant depuis les moyens de fixation 1 selon l'axe longitudinal X2 ;
- des moyens d'accrochage 13, disposés dans le prolongement axial de l'allonge ;
- une portion intermédiaire 14, disposée dans le prolongement axial des moyens d'accrochage ;
- une portion filetée 15, disposée dans le prolongement axial de la portion intermédiaire ; et,
- une pointe 16, disposée dans le prolongement axial de la portion filetée.

Dans l'exemple illustré, les moyens de fixation 11, l'allonge 12, les moyens d'accrochage 13, la portion intermédiaire 14, la portion filetée 15 et la pointe 16, sont formés d'une seule pièce. L'allonge 12, les moyens d'accrochage 13, la portion intermédiaire 14, la portion filetée 15 et la pointe 16, sont coaxiaux et sensiblement symétriques de rotation autour de l'axe longitudinal X2.

La suspente comprend en outre une rondelle 17 et un embout 18, l'une et l'autre pouvant être raccordés, de façon amovible, à la tige 10.

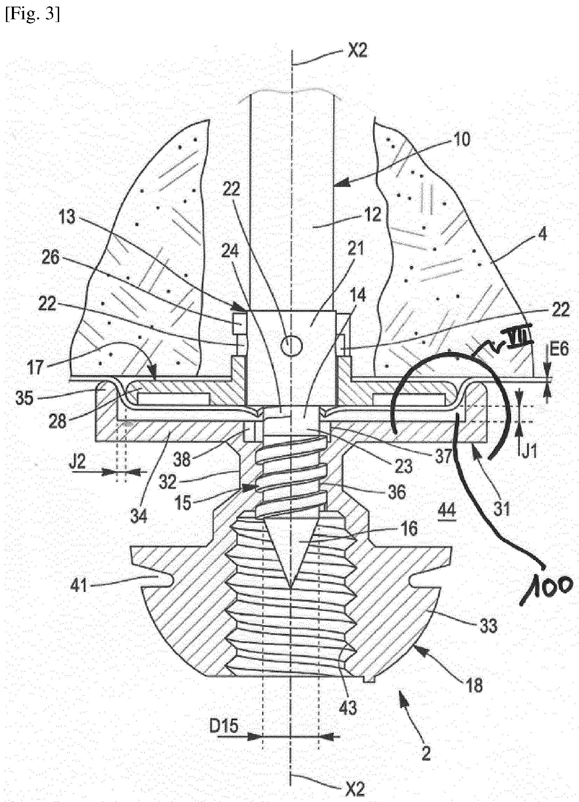

Les figures 1 et 3 illustrent la suspente 2 dans une position d'usage, dans laquelle la rondelle et l'embout sont fixés à la tige 10.

A la figure 1, une seule suspente 2 est représentée, verticalement, fixée à une poutre 3 de la charpente. L'isolant 4 est embroché sur l'allonge 12 et repose sur la rondelle 17 et/ou l'embout 18. La membrane 6 est embrochée sur la tige, entre la rondelle et l'embout. Le parement 7 est suspendu à l'embout 18, à l'aide d'une fourrure 8. Le parement 7 est fixé à la fourrure 8, par exemple par vissage, et la fourrure 8 est fixée par encliquetage à l'embout 18. Cette fourrure est conforme à la norme française NF, notamment au Document Technique Unifié DTU 25.41.

L'allonge 12 a un diamètre constant D12. Les moyens d'accrochage 13 forment une zone cylindrique 21 de diamètre D21 supérieur au diamètre D12 de l'allonge 12. Les moyens d'accrochage comprennent en outre quatre tétons 22 régulièrement répartis autour de l'axe X2 et s'étendant radialement depuis la zone cylindrique 21.

La portion filetée 15 a un noyau de diamètre D15 inférieur au diamètre D12 de l'allonge.

La portion intermédiaire 14 comprend une zone cylindrique de même diamètre D15 que le noyau de la portion filetée 15. Elle comprend en outre une butée 24.

La pointe est conique, elle est dirigée vers le bas et s'étend vers le bas à partir du noyau de la zone filetée ; son diamètre le plus grand est égal au diamètre D15 du noyau.

La rondelle 17 comprend un manchon 26. Quatre crochets 27 sont formés dans un bord supérieur du manchon 26. Les crochets 27 sont prévus pour venir en prise avec les tétons 22 des moyens d'accrochage 13, par encliquetage. La rondelle 17 comprend aussi une collerette annulaire 28, s'étendant radialement depuis un bord inférieur du manchon 26.

L'embout 18 comprend une coupelle 31, un col 32 et une prise 33, le col reliant entre elles la prise et la coupelle. La coupelle comprend un fond 34 en forme de plateau radial 34 et une paroi périphérique sensiblement cylindrique 35 s'étendant vers le haut depuis un bord périphérique du plateau 34. Le col s'étend vers le bas, depuis le fond 34. Un taraudage 36 est formé dans le col, dans un alésage qui débouche par un orifice 37 au travers du fond 34. Une contre-butée 38, qui d'étend vers l'axe X2, est formée à l'intérieur de l'orifice. Le taraudage est prévu pour se visser sur la portion filetée 15. La contre-butée 38 est prévue pour venir buter contre la butée 24, de sorte qu'elle limite le vissage. La paroi 35 comprend un moletage 39 extérieur, qui facilite la manipulation de l'embout et son vissage.

Dans la position d'usage, c'est-à-dire lorsque l'embout 18 est entièrement vissé sur la tige 12, c'est-à-dire lorsque la butée 34 est en contact avec la contre-butée 38, la rondelle 17 est, au moins partiellement, longitudinalement logée dans la coupelle 31. Dans cette position, il y a un jeu longitudinal J1 entre la collerette 28 et le fond 34 et un jeu radial J2 entre un bord périphérique 28B de la collerette 28 et la paroi 35. Les jeux J1, J2 dont tous deux plus larges que l'épaisseur E6 de la membrane 6.

La prise 33 forme un renflement pourvu d'une gorge périphérique 41. La gorge 41 est ouverte radialement de façon à pouvoir y loger, par encliquetage, des bords entrants opposés 42 de la fourrure 8, comme illustré à la figure 1.

Comme illustré à la figure 2, un procédé d'isolation utilisant un système 1 selon l'invention comprend les étapes suivantes :
- fixation de tiges 10 à la charpente 3 ;
- embrochage de l'isolant 4 sur les tiges 10 ; et,
- fixation de rondelles 17 sur les moyens d'accrochage 13 de chacune des tiges 10.

Dans cette position, l'isolant repose, sans l'aide d'un opérateur, sur les collerettes 28.

Le procédé d'isolation comprend ensuite les étapes suivantes :
- embrochage de la membrane 6 sur la tige 10, sous la rondelle ; et,
- vissage de l'embout 18 sur la tige 10.

Dans cette position, la rondelle 17 et l'embout 18 forment entre eux une chicane 100 pour la membrane 6. Ainsi, la membrane est tenue entre un bord supérieur de la paroi 35 et un bord périphérique de la collerette 28, et, la membrane est plaquée contre une face inférieure de cette collerette. Ainsi, l'étanchéité à l'air est assurée là où la tige traverse la membrane.

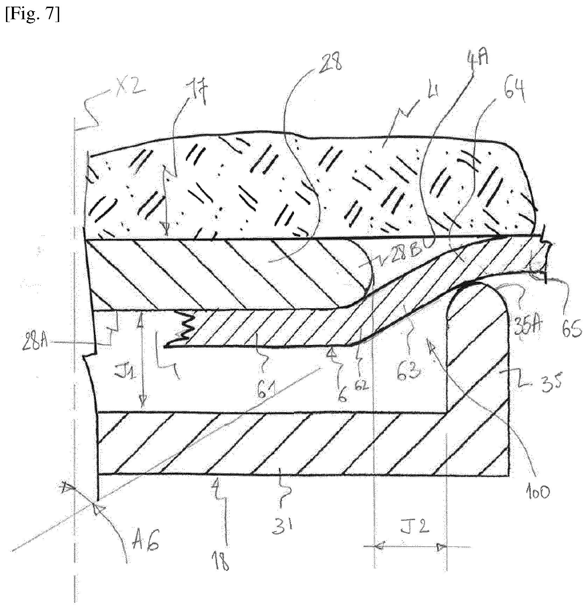

La figure 7 illustre une position de la membrane 6 dans la chicane 100 et au voisinage de cette chicane.

La dimension des jeux J1, J2, supérieure à l'épaisseur E6 de la membrane, évite que cette membrane ne soit pincée entre la rondelle 17 et l'embout 18. Ceci évite la création d'une amorce de rupture ou un déchirement de la membrane, susceptible d'affecter la pérennité de cette étanchéité.

Comme particulièrement illustré à la figure 7, la membrane 6 se déforme au passage de la chicane 100. La membrane 6 comprend plusieurs zones annulaires formées autour de l'axe X de la suspente 2. En s'éloignant de l'axe X2 on distingue principalement cinq zones 61-65.

Une première zone 61 plane et perpendiculaire à l'axe X2 est en contact avec une face inférieure 28A de la collerette 28. La première zone s'étend depuis et autour d'un trou 60 formé dans la membrane par le percement de la pointe 16 de la suspente, jusqu'à un bord périphérique 28B de la collerette.

Une deuxième zone 62, courbe dans le plan de la figure 7, s'enroule contre le bord périphérique arrondi 28B, et forme un raccordement entre la première zone 61 et une troisième zone 63. La troisième zone 63 est tronconique et forme, dans le plan de la figure, un angle A6 avec l'axe X2 de la suspente. On note que, du fait des jeux J1 et J2, l'angle A6 est non nul et, dans l'exemple illustré, voisin de soixante degrés. De préférence, on conçoit le système 1 de sorte que l'angle A6 est compris entre dix et quatre-vingts degrés d'angle, encore plus de préférence, entre trente et quarante-cinq degrés.

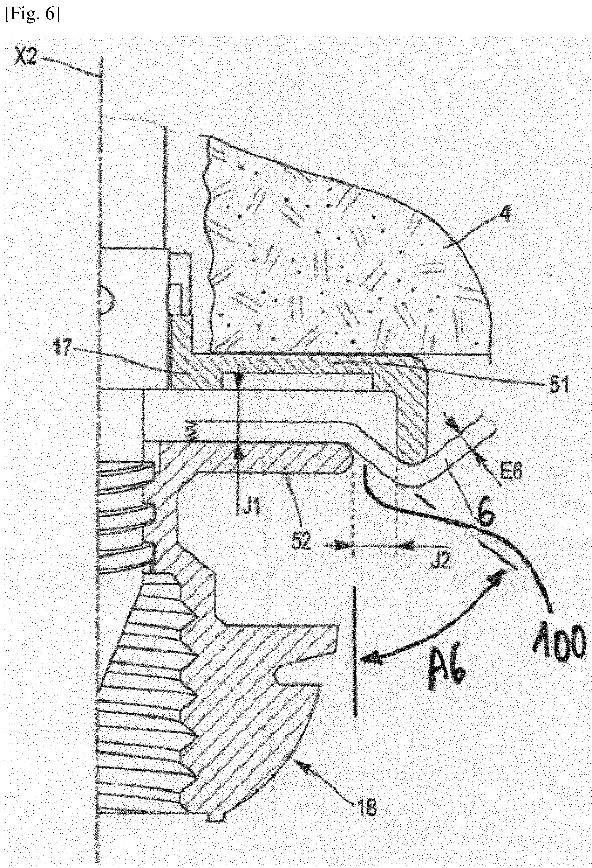

Une quatrième zone 64, courbe dans le plan de la figure 6, prend appui sur un bord périphérique supérieur 35A de la paroi périphérique 35 la coupelle 31. Elle forme un raccordement entre la troisième zone 63 et la cinquième zone 65. Au-delà de cette quatrième zone 64, dans la cinquième zone 65, la membrane 6 est plaquée contre une sous-face 4A de la garniture 4. Ainsi, dans la cinquième zone, la membrane est essentiellement plane et parallèle à la même membrane dans la première zone 61.

On note que la deuxième zone 62 et la quatrième zone 64 forment chacun un pli, les courbures de l'un ayant un signe opposé aux courbures de l'autre. La zone tronconique 63 permet de créer une tension locale dans la membrane, qui assure son maintien libre contre au moins l'un des bords 28B, 35A de la suspente. Par maintien libre on doit comprendre que l'on n'utilise aucun adhésif et que la membrane peut se déplacer transversalement à l'axe X2 de la suspente 2, ce qui évite un déchirement de la membrane en cas d'effort transversal, notamment lors de la mise en œuvre du système 1.

Ainsi, dans la position d'usage de la chicane 100, la membrane forme une zone 61 en contact avec une face 28A de la collerette 28, une zone 65 en contact avec la garniture 4, ces deux zones 61,65 étant sensiblement parallèles entre elles et raccordées par deux plis 62,64 de courbures opposées encadrant une zone tronconique 63.

De préférence, l'orifice 37 de l'embout 18 a un diamètre supérieur au diamètre D15 du noyau, suffisant pour éviter que la membrane ne vienne s'y coincer, là où elle a été déchirée par le passage de la tige 10.

Dans l'exemple illustré aux figures, l'embout 12 comprend un deuxième taraudage 43 coaxial au premier taraudage 36, de diamètre supérieur au premier. Le premier taraudage débouche dans le deuxième et le deuxième taraudage débouche par le bas à la surface inférieure de la prise 33. Le deuxième taraudage est prévu pour y fixer un accessoire, non représenté aux figures.

La présence d'un col 32 sur l'embout 18 permet d'augmenter l'espace 44 entre la membrane 6 et l'habillage 7 ; cet espace peut ainsi servir au passage de câbles, par exemple pour de l'éclairage.

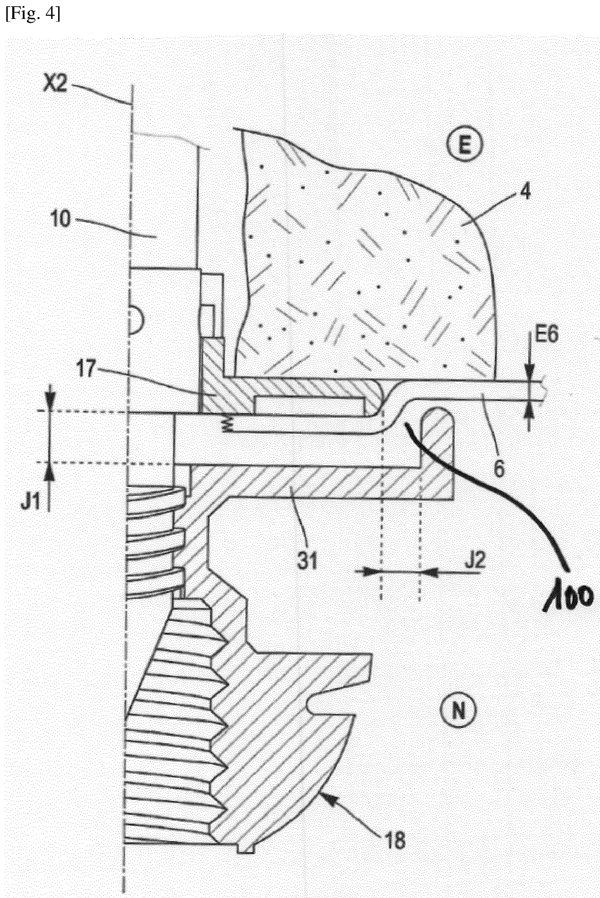

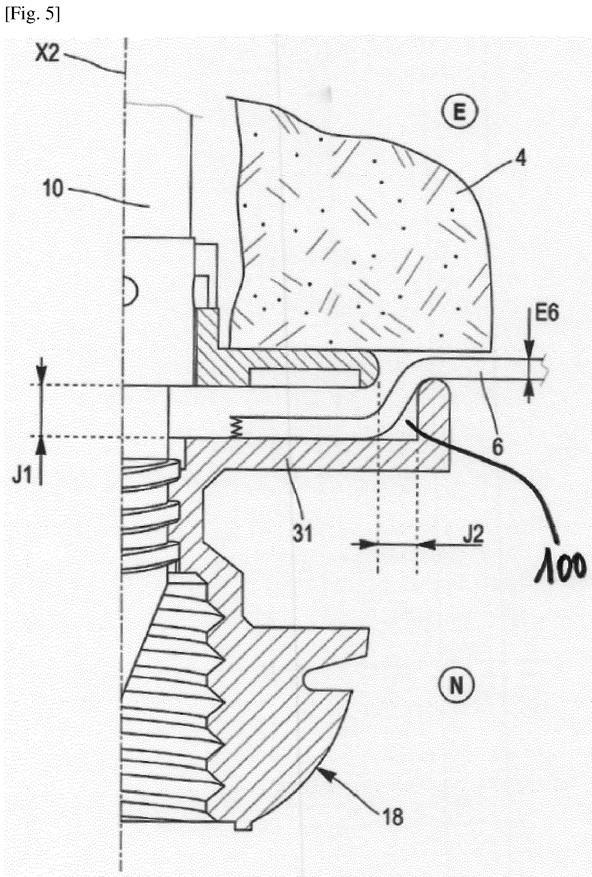

Les figures 4 et 5 sont une vue agrandie similaire à la figure 3, dont seul le côté droit est représenté. A ces figures, la rondelle 17 n'est que partiellement longitudinalement emboîtée dans la coupelle 31, de sorte que l'isolant 4 repose directement sur la rondelle.

La figure 4 représente une position prise par la membrane 6 lorsque la pression à l'intérieur N du bâtiment isolé est supérieure à la pression à l'extérieur E de ce bâtiment. Dans cette position, la membrane 6 est plaquée sous la rondelle 17, et n'a pas de contact direct avec la coupelle 31. L'étanchéité est réalisée par le contact entre la membrane et la rondelle.

La figure 5 représente une position prise par la membrane 6 lorsque la pression à l'intérieur N du bâtiment isolé est inférieure à la pression à l'extérieur E de ce bâtiment. Dans cette position, la membrane 6 est plaquée à l'intérieur et contre la coupelle 31, et n'a pas de contact direct avec la rondelle 17. L'étanchéité est réalisée par le contact entre la membrane et la coupelle.

La figure 6 est similaire aux figures 4 et 5, sauf en ce qu'elle illustre un deuxième mode de réalisation. Ce deuxième mode de réalisation sera décrit en ce qu'il diffère du premier, décrit en référence aux figures 3 à 5 et 7.

Dans ce deuxième mode de réalisation, la rondelle 17 comprend une coupelle 51 dont la concavité est orientée vers le bas et l'embout 18 comprend une collerette annulaire 52 prévue pour s'emboiter axialement dans la coupelle 51. Ainsi emboîtés, la collerette 52 et la coupelle 51 forme une chicane pour la membrane 6.

La disposition est donc sensiblement inversée par rapport au premier mode de réalisation. Cette disposition permet de faire reposer l'isolant 4 sur une face supérieure de la coupelle 51 qui présente une surface d'assise plus importante que celle de la collerette 17 dans le premier mode de réalisation.

Dans chacun des modes de réalisation décrits pour un système 1 selon l'invention, la largeur du jeu longitudinal J1 et la largeur du jeu radial J2 sont l'une, l'autre, ou, de préférence les deux, comprises entre deux et trois fois l'épaisseur E6 de la membrane.

Bien sûr, l'invention n'est pas limitée aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, l'embout peut ne pas comprendre de col. Aussi, l'embout peut ne pas être monté sur la tige par vissage. Il peut y être monté par translation axiale et encliquetage.

En outre, une suspente d'un système selon l'invention n'est pas limitée à faire étanchéité sur une membrane pare-vapeur. Ainsi, un autre type de feuille peut être introduit entre rondelle et embout. Cela peut être le cas d'un raccord d'étanchéité, du type rustine et généralement dénommé « patch », coopérant avec un revêtement de surface de la garniture d'étanchéité là où elle est traversée par la tige de la suspente.

Dans les exemples précédemment décrits, la membrane est fournie indépendamment de la garniture de matériau isolant ; c'est par exemple le cas du système d'isolation référencé « RT Max » disponible au catalogue de la Société Knauf Insulation, 55 rue Aristide Briand à 92300 Levallois-Perret, France. Bien entendu, une suspente d'un système selon l'invention peut aussi être utilisée avec une isolation dans laquelle un revêtement pare-vapeur est fournie d'une seule pièce avec la garniture de matériau isolant ; c'est par exemple le cas de l'isolant référencé « RT Plus » disponible au catalogue de la Société Knauf Insulation, 55 rue Aristide Briand à 92300 Levallois-Perret, France.

## Revendications

1. Système (1) pour isoler un bâtiment, tel qu'il comprend une garniture (4) de matériau isolant, une feuille (6) et au moins une pièce (2) pour fixer ladite garniture, ladite feuille et un parement (7) à une structure (3) d'un bâtiment, notamment à une toiture, notamment à une charpente (3) de cette toiture, chaque pièce comprenant :
- une tige (10) s'étendant selon un axe longitudinal (X2) qui comprend des moyens (11) pour fixer la pièce, au moins indirectement, à ladite structure (3) ;
- des moyens (17, 18) pour porter la garniture ;
- des moyens (18) pour y fixer, au moins indirectement, ledit parement ; et,
- des moyens (28, 31 ; 51, 52) pour former une chicane (100) autour de ladite tige afin d'y insérer, le cas échéant, ladite feuille (6) ;
ladite pièce comprenant en outre une rondelle (17) et un embout (18), la tige comprenant successivement, selon un axe longitudinal (X2) :
- des moyens (11) pour fixer la pièce, au moins indirectement, à la structure ;
- des moyens pour accrocher (13) ladite rondelle (17) sur la tige dans une position d'usage ; et,
- des moyens (15), pour solidariser ledit embout (18) avec la tige, dans la position d'usage ;
la rondelle comprenant une collerette (28) qui s'étend radialement et l'embout comprenant une coupelle (31), ladite collerette et ladite coupelle étant disposées de sorte que, dans la position d'usage, elles forment ensemble la chicane (100) ;
la collerette (28) comprenant un bord périphérique (28B) et la coupelle (31,35) comprenant une paroi périphérique (35) ayant un bord supérieur (35A), **caractérisé en ce qu'**ils sont disposés de sorte que, dans la position d'usage de la chicane (100) ainsi réalisée, la feuille forme une zone (61) en contact avec une face (28A) de la collerette (28) et une zone (65) en contact avec la garniture (4), ces deux zones (61,65) étant sensiblement parallèles entre elles et raccordées par deux plis (62,64) de courbures opposées encadrant une zone tronconique (63).

2. système (1) pour isoler un bâtiment, tel qu'il comprend une garniture (4) de matériau isolant, une feuille (6) et au moins une pièce (2) pour fixer ladite garniture, ladite feuille et un parement (7) à une structure (3) d'un bâtiment, notamment à une toiture, notamment à une charpente (3) de cette toiture, chaque pièce comprenant :
- une tige (10) s'étendant selon un axe longitudinal (X2) qui comprend des moyens (11) pour fixer la pièce, au moins indirectement, à ladite structure (3) ;
- des moyens (17, 18) pour porter la garniture ;
- des moyens (18) pour y fixer, au moins indirectement, ledit parement ; et,
- des moyens (28, 31 ; 51, 52) pour former une chicane (100) autour de ladite tige afin d'y insérer, le cas échéant, ladite feuille (6) ;
ladite pièce comprenant en outre une rondelle (17) et un embout (18), la tige comprenant successivement, selon un axe longitudinal (X2) :
- des moyens (11) pour fixer la pièce, au moins indirectement, à la structure ;
- des moyens pour accrocher (13) ladite rondelle (17) sur la tige dans une position d'usage ; et,
- des moyens (15), pour solidariser ledit embout (18) avec la tige, dans la position d'usage ;
la rondelle (17) comprenant une coupelle (51) et l'embout (18) comprenant une collerette (52) qui s'étend radialement, ladite collerette et ladite coupelle étant disposées de sorte que, dans la position d'usage, elles forment ensemble la chicane (100) :
la collerette (52) comprenant un bord périphérique et la coupelle (51) comprenant une paroi périphérique ayant un bord inférieur, **caractérisé en ce qu'**ils sont disposés de sorte que, dans la position d'usage de la chicane (100) ainsi réalisée, la feuille (6) forme une zone en contact avec une face supérieure de la collerette (52) et une zone en contact avec la garniture (4), ces deux zones étant sensiblement parallèles entre elles et raccordées par deux plis de courbures opposées encadrant une zone tronconique.

3. Système selon l'une des revendications 1 ou 2, **caractérisé en ce que** dans une position d'usage la chicane (100) forme un jeu longitudinal (J1) et un jeu radial (J2) supérieurs à l'épaisseur de la feuille (6).

4. Système selon la revendication 3, **caractérisé en ce que** les jeux (J1, J2) sont compris entre deux et trois fois l'épaisseur de la feuille (6).

5. Système selon l'une des revendications 1 à 4, **caractérisé en ce que**, dans la position d'usage, la collerette est, au moins partiellement, longitudinalement logée dans la coupelle.

6. Système selon l'une des revendications 1 à 5, **caractérisé en ce que** la zone tronconique (63) forme avec l'axe (X2) de la pièce (2) un angle (A6) compris entre dix et quatre-vingts degrés.

7. Système selon la revendication 6, **caractérisé en ce que** l'angle (A6) est compris entre trente de quarante-cinq degrés.

8. Système selon l'une des revendications 1 à 7, **caractérisé en ce que** la rondelle et/ou l'embout forment le support (17, 18) pour la garniture.

9. Système selon l'une des revendications 1 à 8, **caractérisé en ce que** la feuille est une membrane (6), par exemple une membrane pare-vapeur indépendante de la garniture (4).

10. Système selon l'une des revendications 1 à 8, **caractérisé en ce que** la feuille est une rustine coopérant avec un revêtement de surface de la garniture (4).

11. Procédé d'isolation utilisant un système selon la revendication 10, **caractérisé en ce qu'**il comprend les étapes suivantes :
- fixation de la tige (10) de chaque pièce (2) à la structure (3) ;
- embrochage de l'isolant (4) sur les tiges (10) ;
- fixation d'une rondelle (17) sur au moins une des tiges (10) ;
- embrochage de la feuille (6) sur au moins une des tiges (10) sous la rondelle ; et,
- fixation d'un embout (18) sur au moins une des tiges (10),
de sorte que la feuille est maintenue de façon mobile entre ladite au moins une rondelle et ledit au moins un embout.

12. Procédé d'isolation utilisant un système selon la revendication 9, **caractérisé en ce qu'**il comprend les étapes suivantes :
- fixation de la tige (10) de chaque pièce (2) à la structure (3) ;
- embrochage de l'isolant (4) sur les tiges (10) ;
- fixation d'une rondelle (17) sur au moins une des tiges (10) ;
- embrochage de la feuille (6) sur au moins une des tiges (10) sous la rondelle ; et,
- fixation d'un embout (18) sur au moins une des tiges (10),
de sorte que la feuille est maintenue de façon mobile entre ladite au moins une rondelle et ledit au moins un embout.

## Patentansprüche

1. System (1) zum Isolieren eines Gebäudes, wobei es eine Dämmstofflage (4), eine Folie (6) und mindestens ein Bauteil (2) zum Befestigen der Dämmstofflage, der Folie und einer Verkleidung (7) an einer Struktur (3) eines Gebäudes, insbesondere an einem Dach, insbesondere an einem Dachstuhl (3) dieses Dachs, umfasst, wobei jedes Bauteil umfasst:
- eine sich entlang einer Längsachse (X2) erstreckende Stange (10), die Mittel (11) zum zumindest mittelbaren Befestigen des Bauteils an der Struktur (3) umfasst;
- Mittel (17, 18) zum Tragen der Dämmstofflage;
- Mittel (18), um daran zumindest mittelbar die Verkleidung zu befestigen; und
- Mittel (28, 31; 51, 52) zum Bilden eines Labyrinths (100) um die Stange herum, um dort gegebenenfalls die Folie (6) einzuführen;
wobei das Bauteil ferner eine Scheibe (17) und ein Endstück (18) umfasst, wobei die Stange entlang einer Längsachse (X2) nacheinander umfasst:
- Mittel (11) zum zumindest mittelbaren Befestigen des Bauteils an der Struktur;
- Mittel (13) zum Einhängen der Scheibe (17) an der Stange in einer Gebrauchsstellung; und
- Mittel (15) zum Festlegen des Endstücks (18) an der Stange in der Gebrauchsstellung;
wobei die Scheibe einen sich radial erstreckenden Kragen (28) umfasst und das Endstück eine Schale (31) umfasst, wobei der Kragen und die Schale derart angeordnet sind, dass sie in der Gebrauchsstellung zusammen das Labyrinth (100) bilden;
wobei der Kragen (28) einen Umfangsrand (28B) umfasst und die Schale (31, 35) eine Umfangswand (35) mit einem oberen Rand (35A) umfasst,
**dadurch gekennzeichnet, dass** diese derart angeordnet sind, dass die Folie in der Gebrauchsstellung des so gebildeten Labyrinths (100) einen Bereich (61) in Kontakt mit einer Fläche (28A) des Kragens (28) und einen Bereich (65) in Kontakt mit der Dämmstofflage (4) bildet, wobei diese beiden Bereiche (61, 65) im Wesentlichen parallel zueinander sind und durch zwei Falten (62, 64) entgegengesetzter Krümmungen miteinander verbunden sind, die einen kegelstumpfförmigen Bereich (63) einfassen.

2. System (1) zum Isolieren eines Gebäudes, wobei es eine Dämmstofflage (4), eine Folie (6) und mindestens ein Bauteil (2) zum Befestigen der Dämmstofflage, der Folie und einer Verkleidung (7) an einer Struktur (3) eines Gebäudes, insbesondere an einem Dach, insbesondere an einem Dachstuhl (3) dieses Dachs, umfasst, wobei jedes Bauteil umfasst:
- eine sich entlang einer Längsachse (X2) erstreckende Stange (10), die Mittel (11) zum zumindest mittelbaren Befestigen des Bauteils an der Struktur (3) umfasst:
- Mittel (17, 18) zum Tragen der Dämmstofflage;
- Mittel (18), um daran zumindest mittelbar die Verkleidung zu befestigen; und
- Mittel (28, 31; 51, 52) zum Bilden eines Labyrinths (100) um die Stange herum, um dort gegebenenfalls die Folie (6) einzuführen;
wobei das Bauteil ferner eine Scheibe (17) und ein Endstück (18) umfasst, wobei die Stange entlang einer Längsachse (X2) nacheinander umfasst:
- Mittel (11) zum zumindest mittelbaren Befestigen des Bauteils an der Struktur;
- Mittel (13) zum Einhängen der Scheibe (17) an der Stange in einer Gebrauchsstellung; und
- Mittel (15) zum Festlegen des Endstücks (18) an der Stange in der Gebrauchsstellung;
wobei die Scheibe (17) eine Schale (51) umfasst und das Endstück (18) einen sich radial erstreckenden Kragen (52) umfasst, wobei der Kragen und die Schale derart angeordnet sind, dass sie in der Gebrauchsstellung zusammen das Labyrinth (100) bilden;
wobei der Kragen (52) einen Umfangsrand umfasst und die Schale (51) eine Umfangswand mit einem unteren Rand umfasst,
**dadurch gekennzeichnet, dass** diese derart angeordnet sind, dass die Folie (6) in der Gebrauchsstellung des so gebildeten Labyrinths (100) einen Bereich in Kontakt mit einer oberen Fläche des Kragens (52) und einen Bereich in Kontakt mit der Dämmstofflage (4) bildet, wobei diese beiden Bereiche im Wesentlichen parallel zueinander sind und durch zwei Falten entgegengesetzter Krümmungen miteinander verbunden sind, die einen kegelstumpfförmigen Bereich einfassen.

3. System nach Anspruch 1 oder 2, **dadurch gekennzeichnet, dass** das Labyrinth (100) in einer Gebrauchsstellung ein Längsspiel (J1) und ein Radialspiel (J2) bildet, die größer sind als die Dicke der Folie (6).

4. System nach Anspruch 3, **dadurch gekennzeichnet, dass** die Spiele (J1, J2) zwischen dem Zwei- und Dreifachen der Dicke der Folie (6) liegen.

5. System nach einem der Ansprüche 1 bis 4, **dadurch gekennzeichnet, dass** der Kragen in der Gebrauchsstellung zumindest teilweise in Längsrichtung in der Schale aufgenommen ist.

6. System nach einem der Ansprüche 1 bis 5, **dadurch gekennzeichnet, dass** der kegelstumpfförmige Bereich (63) mit der Achse (X2) des Bauteils (2) einen Winkel (A6) zwischen zehn und achtzig Grad bildet.

7. System nach Anspruch 6, **dadurch gekennzeichnet, dass** der Winkel (A6) zwischen dreißig und fünfundvierzig Grad liegt.

8. System nach einem der Ansprüche 1 bis 7, **dadurch gekennzeichnet, dass** die Scheibe und/oder das Endstück die Halterung (17, 18) für die Dämmstofflage bilden.

9. System nach einem der Ansprüche 1 bis 8, **dadurch gekennzeichnet, dass** die Folie eine Membran (6) ist, beispielsweise eine von der Dämmstofflage (4) unabhängige Dampfsperrmembran.

10. System nach einem der Ansprüche 1 bis 8, **dadurch gekennzeichnet, dass** die Folie ein Flicken ist, der mit einer Oberflächenbeschichtung der Dämmstofflage (4) zusammenwirkt.

11. Verfahren zur Isolierung unter Verwendung eines Systems nach Anspruch 10, **dadurch gekennzeichnet, dass** es die folgenden Schritte umfasst:
- Befestigen der Stange (10) jedes Bauteils (2) an der Struktur (3);
- Aufspießen des Dämmstoffs (4) auf die Stangen (10);
- Befestigen einer Scheibe (17) an mindestens einer der Stangen (10);
- Aufspießen der Folie (6) auf mindestens eine der Stangen (10) unterhalb der Scheibe; und
- Befestigen eines Endstücks (18) an mindestens einer der Stangen (10), derart, dass die Folie beweglich zwischen der mindestens einen Scheibe und dem mindestens einen Endstück gehalten wird.

12. Verfahren zur Isolierung unter Verwendung eines Systems nach Anspruch 9, **dadurch gekennzeichnet, dass** es die folgenden Schritte umfasst:
- Befestigen der Stange (10) jedes Bauteils (2) an der Struktur (3);
- Aufspießen des Dämmstoffs (4) auf die Stangen (10);
- Befestigen einer Scheibe (17) an mindestens einer der Stangen (10);
- Aufspießen der Folie (6) auf mindestens eine der Stangen (10) unterhalb der Scheibe; und
- Befestigen eines Endstücks (18) an mindestens einer der Stangen (10), derart, dass die Folie beweglich zwischen der mindestens einen Scheibe und dem mindestens einen Endstück gehalten wird.

## Claims

1. System (1) for insulating a building, comprising a lining (4) of insulating material, a sheet (6) and at least one piece (2) for fixing said lining, said sheet and a facing (7) to a structure (3) of a building, in particular to a roof, in particular to a framework (3) of this roof, each piece comprising:
- a rod (10) extending along a longitudinal axis (X2) which comprises means (11) for fixing the piece, at least indirectly, to said structure (3);
- means (17, 18) for carrying the lining;
- means (18) for securing, at least indirectly, said facing thereto; and,
- means (28, 31; 51, 52) for forming a baffle (100) around said rod in order to insert, where appropriate, said sheet (6) therein;
said piece further comprising a washer (17) and an end part (18), the rod successively comprising, along a longitudinal axis (X2):
- means (11) for securing the piece, at least indirectly, to the structure;
- means for attaching (13) said washer (17) to the rod in an operating position; and,
- means (15) for securing said end part (18) to the shaft in the operating position;
the washer comprising a flange (28) which extends radially and the end part comprising a cup (31), said flange and said cup being arranged such that, in the operating position, they together form the baffle (100);
the flange (28) comprising a peripheral edge (28B) and the cup (31,35) comprising a peripheral wall (35) having an upper edge (35A), **characterized in that** they are arranged such that, in the operating position of the baffle (100) thus formed, the sheet forms a zone (61) in contact with a face (28A) of the flange (28) and a zone (65) in contact with the lining (4), these two zones (61,65) being substantially parallel to each other and connected by two folds (62,64) of opposite curvatures framing a frustoconical zone (63).

2. System (1) for insulating a building, comprising a lining (4) of insulating material, a sheet (6) and at least one piece (2) for fixing said lining, said sheet and a facing (7) to a structure (3) of a building, in particular to a roof, in particular to a framework (3) of this roof, each piece comprising:
- a rod (10) extending along a longitudinal axis (X2) which comprises means (11) for fixing the piece, at least indirectly, to said structure (3);
- means (17, 18) for carrying the lining;
- means (18) for securing, at least indirectly, said facing thereto; and,
- means (28, 31; 51, 52) for forming a baffle (100) around said rod in order to insert, where appropriate, said sheet (6) therein;
said piece further comprising a washer (17) and an end part (18), the rod successively comprising, along a longitudinal axis (X2):
- means (11) for securing the piece, at least indirectly, to the structure;
- means for attaching (13) said washer (17) to the rod in an operating position; and,
- means (15) for securing said end part (18) to the rod in the operating position;
the washer (17) comprising a cup (51) and the end part (18) comprising a flange (52) which extends radially, said flange and said cup being arranged such that, in the operating position, they together form the baffle (100);
the flange (52) comprising a peripheral edge and the cup (51) comprising a peripheral wall having a lower edge, **characterized in that** they are arranged such that, in the operating position of the baffle (100) thus formed, the sheet (6) forms a zone in contact with an upper face of the flange (52) and a zone in contact with the lining (4), these two zones being substantially parallel to each other and connected by two folds of opposite curvatures framing a frustoconical zone.

3. System according to one of claims 1 or 2, **characterized in that** in an operating position the baffle (100) forms a longitudinal clearance (J1) and a radial clearance (J2) greater than the thickness of the sheet (6).

4. System according to claim 3, **characterized in that** the clearances (J1, J2) are between two and three times the thickness of the sheet (6).

5. System according to one of claims 1 to 4, **characterized in that**, in the operating position, the flange is, at least partially, longitudinally housed in the cup.

6. System according to one of claims 1 to 5, **characterized in that** the frustoconical zone (63) forms with the axis (X2) of the piece (2) an angle (A6) between ten and eighty degrees.

7. System according to claim 6, **characterized in that** the angle (A6) is between thirty and forty-five degrees.

8. System according to one of claims 1 to 7, **characterized in that** the washer and/or the end part form the support (17, 18) for the lining.

9. System according to one of claims 1 to 8, **characterized in that** the sheet is a membrane (6), for example a vapor barrier membrane independent of the lining (4).

10. System according to one of claims 1 to 8, **characterized in that** the sheet is a patch cooperating with a surface coating of the lining (4).

11. Insulation method using a system according to claim 10, **characterized in that** it comprises the following steps:
- fixing the rod (10) of each piece (2) to the structure (3);
- skewering the insulation (4) onto the rods (10);
- fixing a washer (17) onto at least one of the rods (10);
- skewering the sheet (6) onto at least one of the rods (10) beneath the washer; and,
- fixing an end part (18) onto at least one of the rods (10), such that the sheet is held in a movable manner between said at least one washer and said at least one end part.

12. Insulation method using a system according to claim 9, **characterized in that** it comprises the following steps:
- fixing the rod (10) of each piece (2) to the structure (3);
- skewering the insulation (4) onto the rods (10);
- fixing a washer (17) onto at least one of the rods (10);
- skewering the sheet (6) onto at least one of the rods (10) beneath the washer; and,
- fixing an end part (18) onto at least one of the rods (10), such that the sheet is held in a movable manner between said at least one washer and said at least one end part.
